# EUROPEAN PATENT APPLICATION

(11) **EP 1 418 654 A1**
(43) Date of publication of application: **12.05.2004**
(21) Application number: 03380245.5
(22) Date of filing: 24.10.2003
(51) Int. Cl.: H02B 1/40, H02B 1/42

(54) **Built-in casing for electrical equipment**

(30) Priority: 29.10.2002 ES 200202604 U
(71) Applicant: I Division Electrica S.A., 50830 Villanueva de Gallego (Zaragoza) (ES)
(72) Inventor: Montanes Ramon, Alfonso, 50830 Villanueva de Gallego (ZA) (ES)
(74) Representative: Alvarez Lopez, Fernando

(57) **Abstract**

It is constructed from a fixed base (1), which consists of a cuboid box, but without the classic rails for the mounting of the electrical components, this base (1) being complemented by a front frame (3) with two side wings (4), stepped backwards and endowed with lines of die-stamps (5) on the first step, for the attachment of the classic protective covers (6), and with another line of die-stamps (7) on its second step, near the rear of the base (1) to which are fixed, with the possibility of height adjustment, the normalized rails (8) for the attachment of the electrical components (9) of the frame. In this way both the rails (8) and the electrical components (9) can be attached onto the frame (3) prior to the attachment of this to the fixed base (1), for example on a workbench, in optimum build conditions.

## Description

### Object of the invention

The present invention relates to a built-in casing, in other words of the type intended for installation in the recess of a wall, so that the cover is level with the surface of the wall, and of the type used as a cabinet housing for electrical panels.

The object of the invention is to achieve a casing that considerably eases the manipulation and installation within the apparatus forming the electrical panel, specifically allowing the assembly to be performed on a workbench, physically independently of the fixed base.

### Background of the invention

The usual solution for large scale built-in casings, involves the use of a fixed base, consisting of a type of cuboid box, open at the front, of sufficient capacity to accommodate the apparatus that it must house, generally of metal plate with die-stamps on its side wall that allow the opening of windows for the access to the cabling, and that endow it with fixing mechanisms for the standardized, classic omega rails, upon which the apparatus is mounted.

The mouth of said fixed base receives a frame that constitutes the attachment mechanism both for the protection covers, through which emerge the control elements for the electrical components, and the front door that finishes the cabinet or casing.

This implies that the assembly of the apparatus must be conducted ''in situ", in other words upon the fixed base once this has been appropriately attached to the wall, which, in turn, implies less than ideal working conditions.

Furthermore, the mounting of the fixed base on the wall requires great precision, since the position of the base dictates the position of both the frame attached in its mouth and the front door, lending to this last item any resultant inclination in the case of defective mounting of the base.

Finally, the front door is attached to the frame with side hinges that dictate a pre-determined opening direction of the door which, in some cases, is not the most ideal.

### Description of the invention

The built-in casing the invention proposes satisfactorily resolves the aforementioned drawbacks, in each and every one of the different aspects stated.

For this, more specifically and in accordance with one of the characteristics of the invention, the frame, which can be coupled to the fixed base, is a solid, resistant element, wherein at the two opposing sides, incorporates die-stamped wings acutely angled backwards, so that when the frame is mounted onto the fixed base, the wings are positioned close to the rear of the base. As a complement to these wings there exist, next to their free edge, lines of die-stamps provided for the attachment of the omega rails, in such a way that the rails, as is deduced from the aforementioned, are not mounted on the fixed base, as is conventional, but mounted on the frame.

This means, on the one hand that the standardized omega rails can be attached to the frame wings with whatever distance is considered convenient, in accordance with the practical requirements of each case, and on the other that, in addition, both the assembly of the rails and the mounting thereon of the electrical apparatus can be undertaken before the mounting of the frame onto the fixed base, for example on a workbench, in the most comfortable conditions for the operator, who would only have to complete the cable connections "in situ", in other words at the site of the fixed base.

In accordance with another of the characteristics of the invention, the frame incorporates, for its screwing into the mouth of the fixed base, oblique indentations that allow a certain degree of positional adjustment of the frame, with the purpose of correcting any errors in the assembly of the fixed base.

It has also been envisaged that the protective covers be reversible, being attached to the frame via clipping and hinging, as well as having a format that allows the capacity of the casing to be varied according to necessity.

Also envisaged has been a reversible assembly for the door, to which end it incorporates, in correspondence with one of the ends of its horizontal edges, selective coupling means for of a pair of retractable lugs, against the respective springs which, in turn, act as axles or balancing hinges and with which collaborate complimentary studs inserted into the holes at both ends of the frame cross-members.

Finally, and in accordance with another of the characteristics of the invention, it has been envisaged that there be a connection element, to join two relatively close-by built-in casings, in the form of a profile, die.-stamped plate, that can be screwed to the two fixed bases to be joined, which takes the form of a small tubular conduit that connects said fixed bases and provides a path for the required cabling.

### Description of the drawings

In order to complement the description being made and with the object of helping with a better understanding of the characteristics of the invention, in accordance with a preferred embodiment thereof, there are included as an integral part of the description, a set of drawings in which, illustrative and non-limiting in nature, the following has been represented:
Figure 1 shows an exploded perspective of a built-in casing for electrical panels produced in accordance with the object of the invention herein.

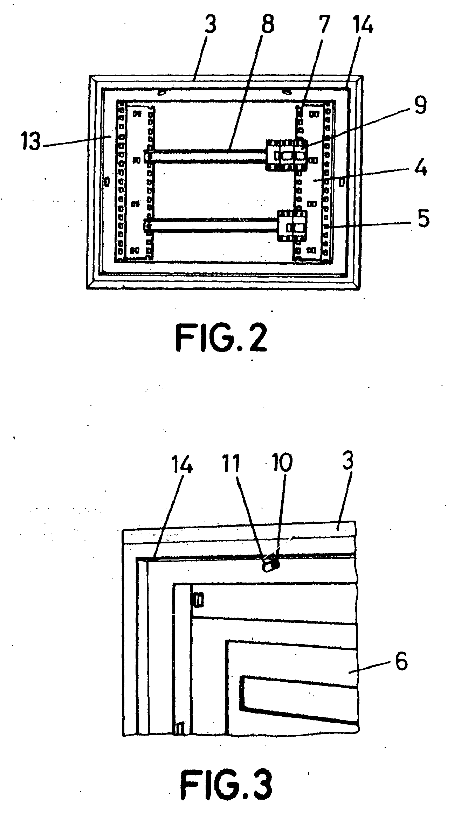

Figure 2 shows a frontal elevation close-up of the frame of the previous casing, upon which a pair of standardized omega rails have been mounted.
Figure 3 shows a partial perspective close-up of the front of the frame, with the protective covers shown in place.
Figure 4 shows an enlarged perspective close-up of one of the vertices of the front door, with its corresponding retractable lug acting as a balancing hinge or axle for the door.
Figure 5 shows finally, a partial perspective close-up of two adjacent fixed bases, connected by a connection element.

### Preferred embodiment of the invention

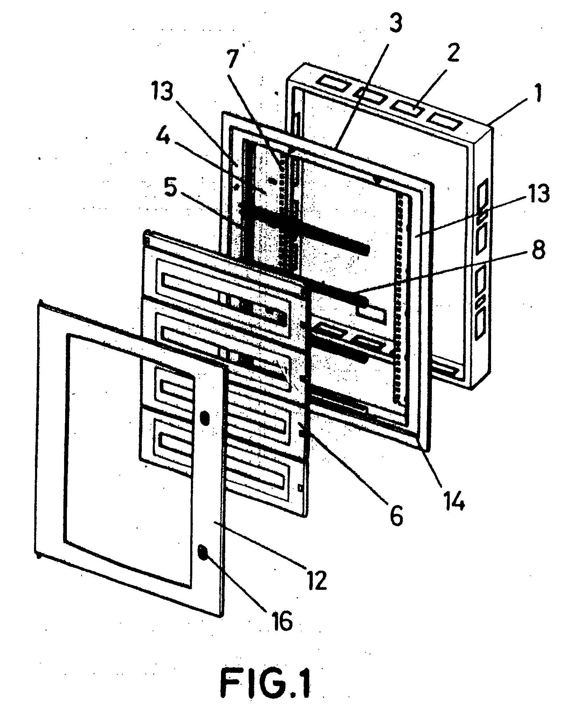

In view of said figures, especially figure 1, it can be observed how the built-in casing for electrical panels consists of a fixed base (1), in the shape of a cuboid box, open at the front, preferably of galvanised sheet steel in order to avoid the corrosive effects of the possible humidity within the walls, with whatever dimensions are required and die-stamps (2) on its side walls, which determine removable portions that allow access of the cables to the interior of the fixed base, at any point in its periphery.

To the mouth of the fixed base (1) is mouinted a frame (3), that has the special characteristic that, in correspondence with its uprights, it presents two stepped lateral wings (4), with a first step that adopts the furthest position and is endowed with lines of tiny rectangular die-stamps (5), for the purpose of fixing the protective covers (6), as will be seen further on, with a second step, more towards the inside, corresponding with the reference (4), on which is established, on its free internal edge, another line of die-stamps (7), similar to the previous ones, these being provided for the attachment of the classic standardized omega rails (8), that form the assembly element for the electrical components (9) of the panel.

Said double-stepping forces the wing (4) sector, upon which are established the die-stamps (7) for the attachment of the rails (8), to be significantly displaced backwards with respect to the frontal plane of the frame (3), in other words close to the rear of the base (1) when the frame is correctly inserted therein.

This special structure allows, as has been previously stated, the mounting of the rails (8) and of the electrical components (9) to be undertaken upon the frame (3) before this is mounted on the fixed base (1), in other words in optimum assembly conditions, for example on a workbench.

The subsequent mounting of the frame (3), already carrying the electrical components (9), upon the fixed base (1) is achieved with the classic screws or clips (10), but with the special characteristic that these can be passed through special obliquely etched holes (11) in the frame, allowing, before the final tightening of the screws (10), positional corrections to the frame (3) with respect to the wall to be made, in order to compensate for possible deviations, in other words small assembly errors, in the assembly of the fixed base (1).

The protective covers (6) are fixed to the frame in a reversible manner, using the die-stamps (5) in its wings (4), it being possible to use a different number of covers, with different dimensions, to vary the capacity of the casing according to necessity.

The casing is complemented, as is conventional, by a front door (12), which can either be glazed or not, as also is conventional, designed to fit within the stepped perimeter (13) of the frame (3), situated outside the ones already mentioned, this door also being reversible, in other words, able to be opened either rightwards or leftwards, to which effect there are, within the cross-members of the frame (3), specifically at the ends thereof, several holes (14), so that the right-hand or left-hand holes in the frame can be selected, by inserting studs in the holes of the selected side, intended to receive the retractable axles (15) acting against corresponding springs, which can then be coupled to the cross-members of the door (12), at the opposite end to the fixing point of classic closure elements (16).

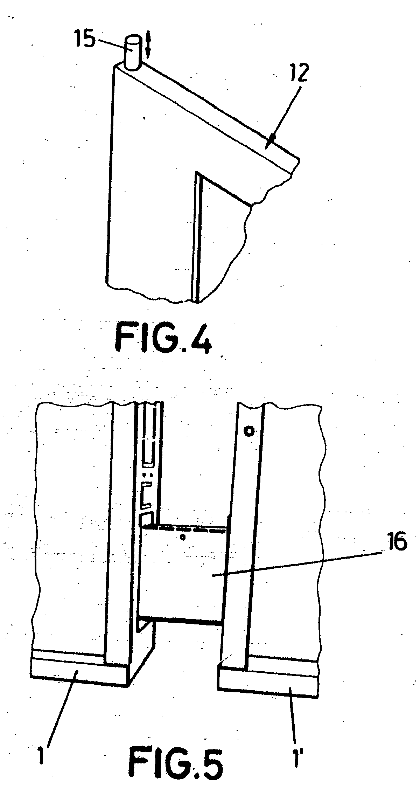

When the casing is too small, despite the considerable size reserved for it, and it becomes necessary to use two fixed bases (1-1'), located adjacent to one another, as shown in figure 5, it is desirable due to the solid fixing requirements of these bases to the wall, that these are adequately separated, as also shown in the figure 5, in order to establish a mass of plaster or other fixing material between them, in which case a connection element (16) has been foreseen, consisting of a profiled, die-stamped plate that takes the form of a tubular communication element between the two bases (1-1'), this connection element (16) being recessed with respect to the plane corresponding to the mouths of the bases so that it remains covered by the filler material. The connection element (16) is attached to the bases (1-1') with self-tapping screws, it being evident that, as a function of specific needs for each case, there can be more than one connection element (16).

## Claims

1. Built-in casing for electrical panels, of the type consisting of a fixed base on the wall, an attachable frame in the mouth of the base, a series of protective covers and a front door, **characterised in that** said frame is made from a solid and resistant element, endowed with its vertical mounting parts and corresponding wings protruding first backwards and then inwards, the internal or perimeter area of these wings determining the mounting area to said frame of the classic standardized omega rails, for the mounting of the electrical components, rails that are positioned near the rear of the fixed base, but are physically independent of it.

2. Built-in casing for electrical panels, according to claim 1, **characterised in that** said frame wings are endowed with two successive steps, a first step endowed with a line of small closely-packed rectangular die-stamps, for the attachment of the protective covers, and a larger second step, next to whose internal free edge is a second line of rectangular die-stamps, similar to the previous ones, for the attachment of the standardized rails.

3. Built-in casing for electrical panels, according to the previous claims, **characterised in that** the holes in the frame designed for the passage of the fixing screws for the fixed base, are etched obliquely to allow correction of possible attachment deviations in the mounting of the fixed base.

4. Built-in casing for electrical panels, according to the previous claims, **characterised in that** the protective covers are reversible with respect to the frame, are fixed to it with clipping and hinging to the die-stamp cut-outs of the first step in the mounting of this frame, and are of variable height in order to permit variation of the casing capacity.

5. Built-in casing for electrical panels, according to the previous claims, **characterised in that** the front door, glazed or non-glazed, is also reversible, the ends of its opposite cross-members to its closure mechanisms being endowed with retractable pivots, acting against respective springs, as a balancing axle, which can be coupled to a pair of studs which can be inserted into the holes in the right-hand and left-hand ends of the frame's cross members, in the perimeter step of the latter wherein said door fits.

6. Built-in casing for electrical panels, according to the previous claims, **characterised in that** a connection element can act with the fixed base allowing the connection between two side-by-side casings, connection element in the form of a profiled, die-stamped plate creating a tubular communication element between both bases, at any side wall height level.
